# EUROPEAN PATENT SPECIFICATION

(11) **EP 1 824 343 B1**
(45) Date of publication and mention of the grant of the patent: **27.04.2016**
(21) Application number: 05789632.6
(22) Date of filing: 29.08.2005
(51) Int. Cl.: A23B 4/20

(54) **ANTIBACTERIAL AGENT FOR PRESERVING FRESH MEAT**
ANTIBAKTERIELLE SUBSTANZ ZUR KONSERVIERUNG VON FRISCHEM FLEISCH
UTILISATION DE GLYCINE ET/OU DERIVÉS DE GLYCINE COMME AGENT ANTIBACTÉRIEN DANS LES PRODUITS ALIMENTAIRES ET/OU BOISSONS

(30) Priority: 27.08.2004 EP 04104118
(43) Date of publication of application: 29.08.2007
(73) Proprietor: PURAC Biochem BV, 4206 AC Gorinchem (NL)
(72) Inventor: BONTENBAL, Edwin, Elize, Willem, NL-6701 CE Wageningen (NL); VEGT, DE, Bert, Theo, NL-3052 HC Rotterdam (NL)
(74) Representative: Beetz, Tom
(86) International application number: PCT/EP2005/054239
(87) International publication number: WO 2006/021588

(56) References cited:
- EP-A- 1 290 955
- CA-A1- 1 261 855
- GB-A- 1 363 209
- US-A- 3 552 978
- US-A- 4 820 520
- US-B1- 6 200 619
- PATENT ABSTRACTS OF JAPAN vol. 016, no. 118 (C-0922), 25 March 1992 (1992-03-25) -& JP 03 290174 A (TOYO SEIKAN KAISHA LTD), 19 December 1991 (1991-12-19)
- PATENT ABSTRACTS OF JAPAN vol. 009, no. 032 (C-265), 9 February 1985 (1985-02-09) -& JP 59 175870 A (SHIYOUWA SANGYO KK), 4 October 1984 (1984-10-04)
- DATABASE FSTA [Online] INTERNATIONAL FOOD INFORMATION SERVICE (IFIS), FRANkFURT-MAIN, DE; 2000, SIRIPORN STONSAOVAPAK ET AL: "Study on the effect of environment on growth and survival of foodborne pathogen Escherichia coli O157:H7." XP002315133 Database accession no. 2001-00-c0487 & FOOD, 2000, 30 (4) 249-260 2000 INST. OF FOOD RES. & PRODUCT DEV., KASETSART UNIV., BANGKOK, THAILAND
- PATENT ABSTRACTS OF JAPAN vol. 1996, no. 10, 31 October 1996 (1996-10-31) -& JP 08 154640 A (NIPPON OIL & FATS CO LTD), 18 June 1996 (1996-06-18)
- PATENT ABSTRACTS OF JAPAN vol. 2000, no. 26, 1 July 2002 (2002-07-01) -& JP 2001 245644 A (PRIMA MEAT PACKERS LTD), 11 September 2001 (2001-09-11)
- DATABASE FSTA [Online] INTERNATIONAL FOOD INFORMATION SERVICE (IFIS), FRANkFURT-MAIN, DE; 1989, HOZOVA B ET AL: "Prolonging the storage life of foods by non-traditional preservation methods." XP002315132 Database accession no. 91-1-08-s0049 & SBORNIK UVTIZ, vol. 7, no. 2, 1989, page 137, SLOVAK INST. OF TECH., BRATISLAVA, CZECHOSLOVAKIA
- PATENT ABSTRACTS OF JAPAN vol. 012, no. 056 (C-477), 19 February 1988 (1988-02-19) -& JP 62 201563 A (NICHIRO GYOGYO KK; others: 01), 5 September 1987 (1987-09-05)

## Description

This invention relates to an antibacterial agent for the preservation of fresh meat.

Conventionally, bacterial growth in food and drink applications is controlled and/or prevented by means of pH regulation, water activity control, refrigeration, addition of quality preserving agents as e.g. nitrite and/or using various processing techniques as for example heat treatment, irradiation or high-pressure treatment.

However, for the preservation of fresh meat the demands are high. On the one hand this is because people are accustomed to the quality (with respect to both taste and texture) of non-preserved meat and thus all preservation methods should preserve the quality of the fresh meat. This is not ensured by most conventional preservation methods. For instance, controlling the water activity in products is possible by means of e.g. salt addition. Controlling or preventing bacterial growth in products by means of salt addition however requires high salt concentrations. Said high concentrations often lead to a loss of taste because the product becomes too salty. Further, a too high salt dosage is also not desired with respect to health issues as for example heart and vascular diseases or blood pressure. Especially, in protein-containing products such as fresh meat (this is including fish and poultry) said high salt concentrations may lead to deterioration of the texture of the product.

Also pH regulation of the pH as means for controlling bacterial growth can cause loss of taste and/or loss of texture of the fresh meat
Nitrite is added in cured meat applications for the purpose of preserving product quality. Nitrite is able to stop bacterial growth of some types of bacteria as for example *Clostridium.* In some cases nitrite is added as colouring agent to maintain a certain colour in the meat product. In fresh meat normally no nitrite is added. At present legislation is aimed at minimisation of the use of nitrite in food applications. Further processing techniques as for example irradiation or high-pressure treatment as method for preservation of products are used for fresh meat but they are costly, time-consuming and often not preferred by the consumer.

On the other hand, the risks of contamination in fresh meat are not neglectible. During escavation, boning and grinding, food pathogens and food spoilage bacteria which are abundantly present in the intestines may get in contact with the fresh meat. As fresh meat is a rich medium with a lot of proteins and fats and has a nearly neutral pH, it is a paradise for growth of said food pathogens and food spoilage bacteria.

Commonly, fresh meat is refrigerated prior to preparation and/or consumption. It is known that one of the most important causes of food poisoning is contamination due to incorrect handling of food. Furthermore, products are often stored at improper conditions. Temperature-abuse (e.g. incidental storage at high temperature) can cause the in the product already present but controlled bacteria to grow again resulting in food poisoning by pathogenic bacteria. Especially food pathogens like *Escherichia coli, Salmonella* and *Campylobacter* are notorious threats in fresh meat. The invention provides a method for the preservation of fresh meat in which the above-mentioned problems in preservation of fresh meat , especially against food poisoning, are solved and further provides a means for fighting food poisoning by pathogenic bacteria of fresh meat due to e.g. temperature-abuse and/or contamination due to e.g. improper handling and/or improper preparation.

Various publications exist which describe the antibacterial effect of glycine against food spoilage in cooked meat, and other foodstuff: JP2000-224976 describes a preservative for food using calcium lactate and glycine in combination with organic acid salts such as e.g. citric acid, acetic acid or gluconic acid.

JP2001-245644 describes a method of improving a preservable period of a processed food such as processed meats or edible daily dishes by using at least a lactic acid salt and an acetic acid salt. Glycine may be added as necessary.

GB 1510942 describes the concurrent use of maltose and glycine to prevent putrefaction in foodstuffs such as Japanese-style confectionaries, jams, jellies, chilled-served desserts, dairy products and fruit preserves.

US 2711976 describes that glycine can be used against food spoilage by " heat resistant indigenous or natural flora which survive the usual cooking or heat treating operation " of custard-type food products.

JP 08-154640 A discloses the use of an antimicrobial agent in foods to improve preservation wherein said agent contains 1-30 wt% acetic acid, with preferably 1-30 wt% of glycine and preferably 0.05-1 wt% of baked calcium. Gyoza (meat dumplings) and Harumaki (egg dough wrapped around minced vegetables, meat etc. in a small roll and fried in deep fat) are disclosed as food applications in which said antibacterial agent is used.

JP 03 290174 A describes incorporating an unheated or low-temperature heat-treated food with glycine and further an organic acid such as acetic acid, adjusted to pH 5.5. or less and that is consequently put into a container to be subjected to high-pressure treatment by an aqueous pressure medium for sterilisation.

International Food Information, XP002315132, Hozova et al., "Prolonging the storage life of foods by non-traditional preservation methods", Slovak. Inst. Of Tech., Czechoslovakia, 1989; This article describes the effect of glycine on prolonging the storage life of preserved products. Pork goulash was used as test product. All samples were processed by heat-treatment. The results show that addition of glycine has an effect on the growth of moulds and yeasts that are present in raw pork that has subsequently been heat-treated and pasteurised. The part of the microorganisms involving *Coliform* microorganisms and arerobic spore-forming microorganisms is not significantly influenced by the presence of glycine.

The present invention is directed to a method, for the preservation of fresh meat as defined in claim 1 wherein glycine and/or glycine derivatives are added to fresh meat.

With glycine derivative is meant (earth) alkali salts of glycine, ammonium glycinate, di- and tripeptides comprising glycine and esters of glycine and C1-C8 alcohols. With esters of glycine and C1-C8 alcohols is meant: esters of glycine and alcohols containing 1 up to 8 carbon atoms. Said carbon atom chains may be branched or straight. Examples of alkali glycinates are sodium glycinate and potassium glycinate; examples of earth alkali glycinates are magnesium glycinate and calcium glycinate; examples of glycinate esters of C1-C8 alcohols are methyl
CA 1261855 discloses a method to control growth of Clostridium botulinum in certain food products, e.g. meat, using an N-acylamino acid.

US 6200619 relates to a preserving agent for foods and drinks that contains a water-soluble hemicellulose and other compounds, among which glycine.

EP 1290955 discloses a few food applications wherein preservative mixtures are tested, some of which containing glycine, but does not disclose the use of glycine as antibacterial agent in fresh meat.

US 4820520 discloses testing of an antiseptic agent comprising a pectin decomposition product and, optionally, glycine, in nutrient broth and food, but does not disclose use of glycine against gram-negative bacterial food pathogens in fresh meat.

US 3552978 discloses a method for improving the quality of meat-containing foods, but is silent on the use of glycine against gram-negative bacterial food pathogens.

JP 59-175870 discloses improvement of the preservation of a wide variety of processed foods by incorporating in the food glycine and an acetic acid salt. However, it does not mention a bacterial species, nor does it mention the preservation of fresh meat.

Stonsaovapak et al. "Study on the Effect of Environment on Growth and Survival of Foodborne Pathogen Escherichia coli 0157:H7" International Food Information Service AN-2001-00-c0487 (XP002315133) disclose that glycine affects growth of two E. coli strains in TSB nutrient broth. In addition, the survival of E. coli O157:H7 in three ready to eat foods held at 4°C is measured, however, without the addition of glycine.

JP 62-201563 discloses a food preservative for boiled fish paste, sausage, cakes, etc. obtained by combining an antibacterial substance, e.g. glycine, with protamine. It does not mention specific bacterial species, nor does it mention fresh meat.

GB 1363209 relates to additives for the treatment of meat and meat products which stabilise the original colour of raw meat. glycinate, ethyl glycinate, buthyl glycinate and hexyl glycinate.

While experiments in which additives such as acids, preservatives (e.g. sorbates) etcetera were added to a broth, are often used as a prediction of its effect in real food and drink products, we have found that the effect of glycine in a broth does not give any indication of its effect in fresh meat. The medium present in fresh meat comprises proteins and fats, has a specific mobility of the liquids present, adsorption or incorporation of the glycine in the food product may occur. Without being committed to a theory, it is thought that the fact that glycine is an amino acid and a natural building block of fresh meat and is abundantly present in food constituents, causes it to interfere in a rather unpredictable way in real food and drink products.

We have found that glycine and/or its derivatives are particularly suitable for the prevention of food poisoning caused by the gram-negative bacterial pathogens *Escherichia Coli, Salmonella* and *Campylobacter.* Said pathogens produce toxine and/or cause infections. Because of the presence of a cell-wall and consequently totally different chemical and physical properties, generally, gram-negative bacterial pathogens are more difficult to fight than gram-positive bacteria.

We have found that glycine and/or its derivatives can effectively be used as a sole antibacterial agent in concentrations that are still acceptable in fresh meat without negatively affecting the product quality with respect to for example taste and texture. We have found that glycine and/or its derivatives can be used as sole antibacterial agent for preservation purposes and further to prevent the consequences of contamination of fresh meat as food poisoning by pathogenic bacteria due to temperature-abuse and/or contamination. It is not needed to add an auxiliary antibacterial agent to achieve the desired preservation effect. This results not only in lower material costs but also in a higher product quality. Products are obtained with less auxiliary ingredients added while maintaining and even improving the quality and shelf life of said products. Further, this is in line with legislation that is aimed at minimisation of the use of additives in food and drink applications. Furthermore, the products obtained are also protected against the consequences of temperature-abuse or contamination.

Fresh meat is normally refrigerated. This is usually at a temperature between 4 and 7 °C with occasional peaks to 12 °C. The use of glycine and its derivatives is very suitable for controlling Salmonella in refrigerated products because it is well recognised that Salmonella remain viable for long periods of time in frozen foods and that survival is enhanced as the storage temperature increases. Further, fresh meat as other refrigerated products are especially sensitive to temperature-abuse and/or contamination due to improper handling of the products. Temperature abuse may occur during transport of the product from the supplier to the store (e.g. improper cooling of the container of truck) but often also occurs during transport of the product from the store to home. Even in the case of incidental temperature increase of the fresh meat, the food safety is ensured when glycine and/or its derivatives are applied.

With fresh meat both "real" fresh meat, and fresh fish and fresh poultry are meant. Examples of fresh meat are: beef, beef steak, beef oxtails, neckbones, short ribs, beef roasts, stew meat, beef briskets, pork, pork chops, pork steaks, cutlets, pork roasts, lamb, veal, game goat, filet americain, steak tartar, or carpaccio. Examples of fresh poultry include chicken, turkey, duck and other poultry such as cornish hen, dove, quail and pheasant. Examples of fresh fish includes both finfish (fillet, anchovy, barracuda, carp, catfish, cod, croaker, eel, flounder, haddock, herring, mackerel, mullet, ocean perch, pike, pompano, porgy, ray, salmon, sardines, sea bass, shark, smelt, sturgeon, swordfish, trout, tuna, whiting), shellfish (abalone, clams, cronch, crab, crayfish, lobster, mussels, oysters, scallops, shrimp and snails) and other seafoods such as jellyfish, octopus, roe, squid, turtle, frog legs.

Some of these fresh meat applications are to be consumed raw, while others are consumed after application of only partial heat treatment, intentionally applied as e.g. for medium cooked steak or unintentionally applied due to improper preparation or improper handling of the food products.

The gram-negative bacterial pathogens *Salmonella, Escherichia Coli, enterobacter sakazakii* and *Campylobacter* and in particular *Salmonella typhimurium, Salmonella enteriditis, Escherichia Coli* O157:H7 and *Campylobacter jejuni* are often found in fresh meat. The use of glycine and/or its derivatives as antibacterial agent in fresh meat is found to be effective against said bacteria without loss of taste and without loss of texture. The use of glycine and/or its derivatives ensures food safety even in the case of partial heat-treatment.

The antibacterial activity not only includes bacteriostatic activity preventing further bacterial growth but also includes for some bacteria bacteriocidal activity that actually reduces the bacterial number.

Glycine concentrations of 0.5 to 3 wt% based on total weight of product were found to be effective as antibacterial agent for *E. Coli* and glycine concentrations of 0.5 to 1.5 wt% based on total weight of product were found to be suited in ensuring taste of the product.

Glycine concentrations of 0.2 to 3 wt% based on total weight of product show antibacterial activity against *Salmonella,* and in particular *Salmonella typhimurium* and *Salmonella enteriditis.* Glycine concentrations of 0.2 to 1.5 wt% based on total weight of product were found to be suited in ensuring taste of the product.

A glycine concentration above 1.5 wt% based on total weight of the product gives the product a sweet taste. Dependent on the type of product this sweet taste is acceptable or not. Accordingly the maximally acceptable glycine concentration in terms of not negatively affecting taste can be increased to concentrations above 1.5 wt% glycine based on total weight of the product.

It was found that the use of glycine and/or its derivatives according to the invention as antibacterial agent in fresh meat may be combined with one or more organic acids and/or one or more of their salts as for example benzoic acid, ascorbic acid, lactic acid, citric acid, acetic acid. The organic acid and/or its salt may be applied alone with glycine and/or derivatives according to the invention or may be applied in mixtures of organic acids and/or one or more of their salts as for example a mixture of potassium lactate and sodium diacetate in combination with glycine and/or its derivatives according to the invention.

Said combinations and/or mixtures of for example lactic acid and/or its derivatives according to the invention result in an antibacterial agent with various functional properties in addition to antibacterial activity. Examples of these added functional properties are improvement of flavour, colour preservation and pH regulation. Examples of a lactic acid salt are sodium lactate, calcium lactate, potassium lactate, ferrous lactate, zinc lactate, magnesium lactate.

It was found that the use of glycine and/or its dervatives as antibacterial agent in fresh meat can be combined with lactic acid and/or its salt in concentrations of 0.2 to 3 wt% by weight based on said foods and drinks.

In some cases it is advantageous to combine the use of glycine and/or its derivatives according to the invention with one or more of the earlier mentioned processing techniques for preservation as e.g. irradiation and/or high-pressure treatment.

The present invention is further illustrated by the following examples, which are not to be construed as being limitative.

### EXAMPLES

### Example 1

Frozen ground beef was defrosted and divided into portions of 1.7 kg and mixed with different concentrations of glycine, 0.5 wt%, 1.0 wt% and 1.5 wt% based on total weight of meat portion. Subsequently the meat was minced once through a 6 mm plate in a disinfected meat mincer.

Each portion (1.5 kg) was inoculated with a suspension of E. Coli O157:H7 (ATCC 43895) to a final level of about 104 cfu per g of product. Prior to inoculation the culture with *E. Coli* O157:H7, kept on slant, was pre-cultivated twice in Brain Heart Infusion (BHI, Oxoid ® CM 225) during 24 hours at 30 °Celsius. The full-grown culture was diluted in physiological peptone saline (PPS) to contain the desired level inoculation. The inoculated meat was minced twice through a 3 mm plate after which the ground beef was packed in portions of 80 g in a modified atmosphere (MAP) consisting of 70% O₂ and 30% CO₂ with a gas volume of about 120 ml. All packages were stored at 12 °Celsius during 12 days. The temperature during the experiment was registered using a data logger.

Samples of each portion of ground beef were taken in duplicate for microbiological analyses at appropriate time intervals. A sample of 20 g was taken aseptically from each portion. The sample was diluted 10-fold in physiological peptone saline (PPS) and homogenised in a stomacher for 1 minute. Additional serial dilutions were made in PPS. Numbers of *E. Coli* O157:H7 bacteria were determined using Sorbitol MacConkey agar (SMAC, Oxoid ® CM813) as mentioned in NEN-ISO 16649-2:2001. The plates were incubated at 42 °Celsius during 1 day.

TABLE I shows the results (in duplicate) of the microbiological analyses of ground beef inoculated with *E. Coli* O157:H7 and with three different concentrations of glycine added during storage in MAP at 12 °Celsius.

**TABLE I: Results of E.Coli O157:H7 bacterial count on ground beef with different glycine concentrations in MAP during storage at 12 °Celsius.**

| **Additive** | **Bacterial counts in log cfu per g of product after storage during** | | | | | |
|---|---|---|---|---|---|---|
| | **0 days** | **3 days** | **5 days** | **7 days** | **10 days** | **12 days** |
| Control (no additive) | 3.96 | 5.67 | 5.46 | 5.26 | 5.72 | 5.54 |
| | 4.08 | 4.94 | 5.34 | 5.92 | 5.53 | 5.58 |
| 0.5 wt% glycine | 4.03 | 4.26 | 3.78 | 3.90 | 3.86 | 3.30 |
| | 3.98 | - | 4.38 | 4.28 | 3.73 | 3.49 |
| 1.0 wt% glycine | 4.00 | 4.20 | 4.26 | 3.36 | 2.30 | 2.58 |
| | 4.00 | 3.82 | 3.95 | 3.51 | - | 1.48 |
| 1.5 wt% glycine | 4.03 | 3.94 | 2.85 | 2.30 | 2.00 | 1.30 |
| | 4.05 | 3.87 | 2.85 | 2.00 | 1.70 | 1.78 |

The results show that a concentration of 0.5 wt% of glycine based on total weight of product has antibacterial activity against *E.Coli* 0157:H7. Concentrations of 1.0 wt% of glycine based on total weight of product show a clear bacteriocidal activity against *E.Coli* O157:H7 and even reduce the bacterial number from 4 to 2 log cfu per g of product in 7 days of storage.

### Example 2

A culture of *E.Coli* O157:H7 (ATCC:700728) was pre-cultivated on BHI broth (Brain Heart Infusion, Oxoid ® CM225) and incubated for 24 h. at 30 °C. The culture was 50 fold diluted in peptone physiological salt (PPS).

3000 gram of irradiated ground beef was divided into 3 samples and mixed with glycine thoroughly to prepare samples with 0, 1.0, and 1.5 wt% glycine, respectively. Subsequently, each sample was divided into 30 portions of 25 grams. The portions were put into a sterile bag (Interscience ®bagfilters, 400 ml, Model P) and inoculated with the diluted culture broth to a final level of about 10⁵ cfu/gr product (250 µl culture/PPS). The culture and samples were mixed thoroughly by hand. The bags were sealed directly afterwards under aerobic conditions. Finally the samples were incubated at 8 °C.

At appropriate time-intervals, portions of each concentration were diluted 2-fold in PPS and homogenized in a stomacher (Lab Blender ® 400) for 1 minute. Additional serial dilutions were made in PPS.

The dilutions were brought on "Violet Red Bile Glucose Agar" (Oxoid ® CM485) and incubated for 24 hours at 30 °C.

In TABLE II the results are compiled of the microbiological analyses of irradiated ground beef inoculated with *E. Coli* O157:H7 and with three different concentrations of glycine added during storage at 8 °Celsius.

**TABLE II: Results of E.Coli O157:H7 bacterial count on irradiated ground beef with different glycine concentrations during storage at 8 °Celsius.**

| **Additive** | **Bacterial counts in log cfu per g of product after storage during** | | | |
|---|---|---|---|---|
| | **0 days** | **3 days** | **6 days** | **13 days** |
| Control (no additive) | 5.5 | 5.6 | 6.2 | 6.5 |
| 1.0 wt% glycine | 5.4 | 5.2 | 4.5 | 5.5 |
| 1.5 wt% glycine | 5.4 | 4.1 | 3.2 | 0.0 |

A small inhibiting effect was seen with the addition of 1,0 % of glycine, whereas the addition of 1,5 % glycine gave a bacteriocidal effect.

### Example 3

Fresh pork meat from shoulders was minced once through a 12 mm plate in a disinfected meat mincer and manually homogenized. The pork meat was divided into 7 portions of 2.5 kg and mixed with different concentrations of glycine, 0.5wt%, 1.0wt% and 1.5 wt% based on total weight of meat portion.

Subsequently the meat was minced once through a 6 mm plate. Each batch (2.3 kg) was inoculated with 10 ml of a suspension of *E. Coli* O157:H7 (ATCC 43895) to a final level of about 10⁴ cfu per g product. Before inoculation the culture, kept on slant, was pre-cultivated twice in Brain Heart Infusion (BHI, Oxoid ® CM225) for 24 hours at 30°C. The full grown culture was diluted in physiological peptone saline (PPS) to obtain the desired level.

The inoculated meat was minced again twice through a 3 mm plate after which the ground pork was packed in 24 portions of 80 g in a modified atmosphere (MAP), consisting of 80% O₂ and 20% CO₂ with a gas volume of about 120 ml. Subsequently 9 packages were stored at 12°C for up to 12 days. During the experiment the temperatures were registered using a data logger.

At appropriate time intervals, samples of ground pork of each batch were taken in duplicate for microbiological analyses. From each single package a sample of 20 g was taken aseptically, diluted 10-fold in (PPS) and homogenised in a stomacher for 1 minute. Additional serial dilutions were made in PPS. Numbers of *E. Coli* O157:H7 bacteria were determined using CT-SMAC (Sorbitol MacConkey Agar, Oxoid ® CM813 and Cefixime-Tellurite supplement, Oxoid ® SR172) as mentioned in NEN-ISO 16649-2:2001. The plates were incubated at 42°C for 1 day.

TABLE III shows the results (in duplicate) of the microbiological analyses of ground pork inoculated with *E. Coli* 0157:H7 and with three different concentrations of glycine added during storage at 12 °C.

**TABLE III: Results of E.Coli O157:H7 bacterial count on ground pork with different glycine concentrations in MAP during storage at 12 °Celsius.**

| **Additive** | **Bacterial counts in log cfu per g of product after storage during** | | | | |
|---|---|---|---|---|---|
| | **0 days** | **3 days** | **6 days** | **10 days** | **12 days** |
| Control (no additive) | 3.68 | 5.28 | 7.38 | 7.43 | 7.29 |
| | 3.72 | 5.57 | 7.06 | 7.18 | 7.14 |
| 0.5 wt% glycine | 3.75 | 5.65. | 7.45 | 7.04 | 6.56 |
| | 3.66 | 5.80 | 7.28 | 7.08 | 6.66 |
| 1.0 wt glycine % | 3.51 | 5.01. | 6.38 | 6.15 | 5.18 |
| | 3.51 | 5.05 | 6.51 | 5.95 | 4.70 |
| 1.5 wt% glycine | 3.81 | 2.30 | 2.61 | 1.00 | 1.00 |
| | 3.83 | 2.00 | 2.59 | 1.00 | 1.00 |

After 5 days storage at 12°C minor differences in appearance of ground pork were noticed. After 7 day ground pork samples without additives and with lower quantities of glycine showed a grey colour. After 10 days all products were judges as being grey.

### Example 4

Batches consisting of two vacuum packs with irradiated ground chicken, circa 1500 g each, were prepared with respectively 0.0, 0.5, 1.0, and 1.5 wt% glycine as antibacterial agent. The ground chicken batches were stored for 1 day at 0°C until further examination.

Each batch of ground chicken was inoculated with a *Salmonella typhimurium* (M90003246/0550). Before inoculation the culture, kept on slant in refrigerator, was pre-cultivated twice in Brain Heart Infusion broth (BHI, Oxoid ® CM225) for 24 hours at 30°C. The full grown culture was diluted in physiological peptone saline (PPS) to obtain a suspension at the desired level. A quantity of ground chicken (ca. 1000 g) of each composition was put in a disinfected tray and inoculated with 10 ml of *S. typhimurium* suspension to a final level of about 10⁴ cfu per g product. After inoculation, the ground chicken was homogenized manually. Subsequently, the product was divided into portions of 50 g and packaged aerobically in plastic pouches (16 x 11 x 1.5 cm, ca 250 ml). The packages obtained were stored at 30°C for up to 24 hours and at 7°C for up to 30 days. During the experiment the temperatures in the storage were registered.

At appropriate time intervals, samples of ground chicken of each batch were taken in duplicate for microbiological analyses. From each single package a sample of 20 g was taken aseptically, diluted 10-fold in PPS and homogenized in a stomacher for 1 minute.
Additional serial dilutions were made in PPS. Numbers of *S. typhimurium* were determined using Violet Red Bile Glucose Agar (VRBGA, Oxoid ® CM485) as mentioned in ISO 55552:1997. Plates were incubated at 37°C for 1 day.

The results of the microbiological analyses of the ground chicken with different amounts of glycine during aerobically packed storage at 7°C are given in TABLE IV

**TABLE IV Results of S. typhimurium counts on aerobically packed ground chicken with amounts of glycine during storage at 7°C**

| **Additive** | **Bacterial counts in log cfu per g of product after storage during** | | | | |
|---|---|---|---|---|---|
| | **0 days** | **3 days** | **7 days** | **14 days** | **30 days** |
| Control (no additive) | 3.73 | 3.85 | 3.88 | 4.45 | 7.24 |
| | 3.88 | 3.83 | 3.83 | 4.20 | 6.59 |
| 0.5 wt% glycine | 3.69 | 3.76 | 3.70 | 3.63 | 3.51 |
| | 3.86 | 3.88 | 3.64 | 2.60 | 4.02 |
| 1.0 wt% glycine | 3.72 | 3.34 | 2.97 | 2.18 | 1.78 |
| | 3.74 | 3.58 | 2.96 | 1.85 | 1.60 |
| 1.5 wt% glycine | 3.85 | 3.30 | 3.00 | 2.04 | 1.70 |
| | 3.83 | 3.54 | 3.08 | 1.85 | 1.78 |

During storage at 7°C development of *S. typhimurium* was inhibited in ground chicken containing glycine in quantities of 0.5% during the entire storage period of 30 days. In ground chicken containing glycine in quantities of 1 to 1.5% a two log reduction of *S. typhimurium* was observed during that period.

## Claims

1. Method for the preservation of fresh meat to prevent food poisoning by the food pathogens *Escherichia coli, Salmonella,* and *Campylobacter* wherein glycine and/or a glycine derivative selected from the group consisting of (earth) alkali metal salts of glycine, ammonium glycinate, di-and tripeptides comprising glycine and esters of glycine and C1-C8 alcohols is added to fresh meat.

2. Method according to claim 1 wherein glycine or its derivative is added as the sole antibacterial agent to fresh meat.

3. Method according to any one of the preceding claims wherein one or more organic acids and/or one or more of their salts is added to the fresh meat.

4. Method according to claim 3 wherein lactic acid and/or its lactate salt is added to the fresh meat.

5. Method according to any one of the preceding claims wherein glycine or its derivative is added to fresh meat to reach concentrations of 0.5 to 3 wt% and preferably 0.5 to 1.5 wt% glycine and/or said glycine derivative by weight based on said fresh meat.

6. Method according to claim 5 wherein one or more organic acids and/or one or more of their salts is added to fresh meat to reach concentrations of 0.5 to 3 wt% based on total weight of the fresh meat.

7. Method according to claim 6 wherein lactic acid and/or its salt is added to the fresh meat to reach concentrations of 0.5 to 3 wt% based on total weight of the fresh meat.

8. Method according to any one of the preceding claims wherein the *Salmonella* bacteria are *Salmonella typhimurium* and/or *Salmonella enteriditis.*

9. Method according to any one of the preceding claims wherein the *Escherichia coli* bacteria are *Escherichia coli 0157:H7.*

## Patentansprüche

1. Verfahren zur Konservierung von frischem Fleisch, um eine Nahrungsmittelvergiftung durch die Lebensmittelpathogene *Escherichia coli, Salmortella*, und *Campylobacter* zu verhindern, wobei Glycin und/oder ein Glycinderivat, ausgewählt aus der Gruppe bestehend aus (Erd)alkalimetallsalzen des Glycins, Ammoniumglycinat, Di- und Tripeptiden, umfassend Glycin, und Ester von Glycin und C1-C8-Alkoholen, dem frischen Fleisch zugegeben wird.

2. Verfahren gemäß Anspruch 1, wobei frischem Fleisch Glycin oder dessen Derivat als das einzige antibakterielle Mittel zugegeben wird.

3. Verfahren gemäß einem der vorhergehenden Ansprüche, wobei eine oder mehrere organische Säuren und/oder eines oder mehrere von deren Salzen dem frischen Fleisch zugegeben werden.

4. Verfahren gemäß Anspruch 3, wobei Milchsäure und/oder dessen Lactatsalz dem frischen Fleisch zugegeben wird.

5. Verfahren gemäß einem der vorhergehenden Ansprüche, wobei Glycin oder dessen Derivate frischem Fleisch zugegeben wird, um Konzentrationen von 0,5 bis 3 Gew.-% und vorzugsweise 0,5 bis 1,5 Gew.-% Glycin und/oder dessen Glycinderivat auf der Basis des frischen Fleisches zu erreichen.

6. Verfahren gemäß Anspruch 5, wobei eine oder mehrere organische Säuren und/oder eines oder mehrere von deren Salzen frischem Fleisch zugegeben werden, um Konzentrationen von 0,5 bis 3 Gew.-%, basierend auf dem Gesamtgewicht des frischen Fleisches, zu erreichen.

7. Verfahren gemäß Anspruch 6, wobei Milchsäure und/oder deren Salz dem frischen Fleisch zugegeben wird, um Konzentrationen von 0,5 bis 3 Gew.-%, basierend auf dem Gesamtgewicht des frischen Fleisches, zu erreichen.

8. Verfahren gemäß einem der vorhergehenden Ansprüche, wobei die *Salmortella-Bakterien Salmortella yphimurium* und/oder *Salmortella ertteriditis* sind.

9. Verfahren gemäß einem der vorhergehenden Ansprüche, wobei die *Escherichia coli-*Bakterien *Escherichia coli 0157:H7* sind.

## Revendications

1. Procédé pour la conservation de la viande fraîche afin d'éviter une intoxication alimentaire par les agents pathogènes alimentaires *Escherichia coli, Salmonella* et *Campylobacter,* dans lequel la glycine et/ou un dérivé de glycine choisi dans le groupe constitué des sels de métaux alcalins (alcalino-terreux) de glycine, de glycinate d'ammonium, de dipeptides et tripeptides comprenant la glycine et d'esters de glycine et d'alcools en C₁ à C₈ est ajouté(e) à la viande fraîche.

2. Procédé selon la revendication 1, dans lequel la glycine ou son dérivé est ajouté(e) comme étant le seul agent antibactérien à la viande fraîche.

3. Procédé selon l'une quelconque des revendications précédentes, dans lequel un ou plusieurs acide(s) organique(s) et/ou un ou plusieurs de leurs sels est/sont ajouté(s) à la viande fraîche.

4. Procédé selon la revendication 3, dans lequel l'acide lactique et/ou son sel de lactate est ajouté à la viande fraîche.

5. Procédé selon l'une quelconque des revendications précédentes, dans lequel la glycine ou son dérivé est ajouté(e) à la viande fraîche pour atteindre des concentrations allant de 0,5 à 3% en poids, et de préférence de 0,5 à 1,5% en poids de glycine et/ou dudit dérivé de glycine en poids par rapport à ladite viande fraîche.

6. Procédé selon la revendication 5, dans lequel un ou plusieurs acide(s) organique(s) et/ou un ou plusieurs de leurs sels est/sont ajouté(s) à la viande fraîche pour atteindre des concentrations allant de 0,5 à 3% en poids par rapport au poids total de la viande fraîche.

7. Procédé selon la revendication 6, dans lequel l'acide lactique et/ou son sel est ajouté à la viande fraîche pour atteindre des concentrations allant de 0,5 à 3% en poids par rapport au poids total de la viande fraîche.

8. Procédé selon l'une quelconque des revendications précédentes, dans lequel les bactéries *Salmonella* sont *Salmonella typhimurium* et/ou *Salmonella enteritidis.*

9. Procédé selon l'une quelconque des revendications précédentes, dans lequel les bactéries *Escherichia coli* sont *Escherichia coli* 0157:H7.
